(19) Europäisches Patentamt

European Patent Office

Office européen des brevets

(11) EP 0 642 689 B1

(12) FASCICULE DE BREVET EUROPEEN

(45) Date de publication et mention
de la délivrance du brevet:
**03.05.2000 Bulletin 2000/18**

(51) Int. Cl.⁷: **G09B 9/12**, G09B 9/30,
G09B 9/14

(21) Numéro de dépôt: 93913075.3

(22) Date de dépôt: **26.05.1993**

(86) Numéro de dépôt international:
**PCT/FR93/00515**

(87) Numéro de publication internationale:
**WO 93/24916 (09.12.1993 Gazette 1993/29)**

(54) **DISPOSITIF DE SIMULATION D'EFFETS PHYSIQUES**

VORRICHTUNG ZUM SIMULIEREN VON PHYSIKALISCHEN WIRKUNGEN.

DEVICE FOR SIMULATION OF PHYSICAL EFFECTS

(84) Etats contractants désignés:
**BE CH DE GB IT LI NL**

(30) Priorité: **26.05.1992 FR 9206407**

(43) Date de publication de la demande:
**15.03.1995 Bulletin 1995/11**

(73) Titulaire:
**FAUTRAD, Antoine Olivier**
**F-75015 Paris (FR)**

(72) Inventeur:
**FAUTRAD, Antoine Olivier**
**F-75015 Paris (FR)**

(74) Mandataire: **Pernez, Helga et al**
**Breese-Majerowicz,**
**3, avenue de l'Opéra**
**75001 Paris (FR)**

(56) Documents cités:
**EP-A- 0 237 660       EP-A- 0 406 729**
**EP-A- 0 479 422       WO-A-83/02028**
**WO-A-90/03627        FR-A- 2 551 574**
**NL-A- 9 000 722      US-A- 3 829 988**
**US-A- 4 066 256      US-A- 4 478 407**
**US-A- 4 743 200      US-A- 4 856 771**

Printed by Xerox (UK) Business Services
2.16.7 (HRS)/3.6

**Description**

La présente invention concerne un dispositif de simulation d'effets physiques, du type comportant une plate-forme mobile selon au moins un degré de liberté, animée par rapport à un référentiel fixe par au moins un actionneur, ladite plate-forme comportant au moins un moyen pour l'installation de l'utilisateur, par exemple un siège.

De tels simulateurs sont employés dans des applications civiles ou militaires pour l'entraînement ou l'étude des réactions d'un sujet. Ils mettent toutefois en oeuvre des techniques d'asservissement et de commande complexes, et sont d'un coût de fabrication et d'utilisation très élevé.

On connaît en particulier le brevet américain n° 4.478.407 divulguant un simulateur de cabine de pilotage d'un avion. Les mouvements de la cabine sont commandés par un manche de pilotage. L'inclinaison de la cabinet est de type "tout-ou-rien", et est déterminée en fonction de la position du manche et non pas de l'accélération calculée du véhicule visualisé dans un espace virtuel.

Le brevet PCT90/03627 décrit un système de commande d'une pluralité de simulateurs interactifs. Ce document décrit le mode de gestion des images visualisées dans un simulateur, en fonction d'informations provenant des autres simulateurs.

Le brevet PCT83/02028 décrit un simulateur comportant un écran de visualisation. L'utilisateur est installé dans une cabine laissant la possibilité de voir l'environnement extérieur: l'utilisateur conserve donc la vision du référentiel fixe d'une part, et du référentiel image d'autre part. Par ailleurs, pour simuler une accélération, la cabine est soumise à des mouvements de translation de faible amplitude dans la direction correspondant à la direction de l'accélération fictive. L'accélération simulée est donc limitée dans le temps du fait de la course limitée du système d'entraînement. De même, l'amplitude de l'accélération est limitée par la puissance du vérin employé.

On connaît encore le brevet US4,066,256 qui divulgue un dispositif formé par une plate-forme mobile animée par des vérins commandant l'inclinaison de la cabine en fonction de l'accélération simulée. Cette plate-forme mobile comporte une cabinet masquant la vue de l'environnement extérieur, et un écran de projection d'un film comportant une piste pour la commande des vérins.

Un autre brevet américain US3,281,962 divulgue un simulateur de vol comportant une cabine mobile supportée par des axes de basculement.

L'objet de la présente invention est un dispositif susceptible d'être raccordé à une console de jeu vidéo pour produire sur l'utilisateur des effets physiques réalistes complétant les effets visuels apparaissant sur un écran de visualisation. Le but recherché est de permettre la simulation d'accélération pendant des période prolongée sans imposer à l'utilisateur des accélérations linéaires proportionnelles à l'accélération fictive.

A cet effet, l'invention concerne plus particulièrement un dispositif de simulation d'effets physiques, du type comportant une plate-forme mobile animée par rapport à un référentiel fixe par au moins un actionneur commandant l'inclinaison de la plate-forme en fonction de l'accélération simulée et des moyens pour la visualisation d'images animées, la plate-forme mobile comportant au moins un moyen pour l'installation de l'utilisateur, par exemple un siège, et des moyens pour masquer de la vue de l'utilisateur tout objet du référentiel fixe caractérisé en ce que le dispositif comportant en oeuvre un calculateur délivrant des signaux de commande de l'inclinaison de la plate-forme en fonction de l'accélération calculée d'un point de référence mobile de l'image visualisé par rapport à l'espace fixe de l'image visualisée, les informations relatives au point de référence mobile étant délivrées par le calculateur d'une console de jeu.

De préférence, la plate-forme est mobile par rapport à au moins un axe de rotation horizontal, l'inclinaison de ladite plate-forme mobile étant proportionnelle à l'accélération calculée selon un direction horizontale perpendiculaire à l'axe de rotation de la plate-forme d'un point de référence de l'image visualisée par rapport à l'espace fixe de l'image visualisée.

Avantageusement, la plate-forme est mobile par rapport à deux axes rotation horizontaux, l'inclinaison de ladite plate-forme mobile par rapport à chacun desdits axes horizontaux étant proportionnelle à l'accélération calculée selon la direction horizontale perpendiculaire à l'axe de rotation considéré d'un point de référence de l'image visualisée par rapport à l'espace fixe de l'image visualisée.

Ce mode de réalisation permet de reproduire des sensation d'accélération et de virage jusqu'à un G, de façon à la fois réaliste et simple.

Selon un mode de réalisation particulier, la plate-forme mobile est solidaire d'un premier bras mobile en rotation par rapport à un pivot horizontal, ledit bras mobile étant articulé en rotation par rapport à un axe horizontal perpendiculaire audit pivot.

Selon une première variante, les moyens de visualisation sont constitués par un casque individuelle masquant totalement la visibilité de l'utilisateur et comportant un écran de visualisation intégré.

Selon une deuxième variante, la plate-forme comporte une cabine opaque à l'intérieur de laquelle sont disposés des moyens de visualisations constitués par au moins un écran de visualisation.

Selon un mode de mise en oeuvre préféré, le dispositif de simulation d'effets physiques selon l'invention comporte au moins une manette pour commander le déroulement d'un programme de visualisation d'images de synthèse.

Selon une variante particulière, l'utilisateur est mobile selon un axe perpendiculaire à la surface de l'écran de visualisation. Four cette variante, il est possible d'envisager un mode de mise en oeuvre dans lequel la plate-forme comporte un siège mobile, destiné plus particulièrement au cas où l'utilisateur porte un casque, ou un mode de réalisation dans lequel le dispositif comporte une cabine mobile intégrant un siège et un écran. Cette variante permet d'imposer à la plate-forme mobile une impulsion de brève durée au moment de l'initialisation du basculement de la plate-forme. A titre de variante particulière, la plate-forme mobile est entraînée par un mécanisme assurant un déplacement axial simultanément à l'un au moins des mouvements de rotation

Selon une autre variante, la plate-forme est constituée par une cabine comportant une partie inférieure semi-spérique reposant dans un socle présentant une partie creuse complémentaire. Le positionnement et le guidage de la plate-forme est réalisé par des jets d'air sous pression et/ou des galets.

la présente invention sera mieux comprise à la lecture de la description qui suit, faisant référence aux dessins où:

- la figure 1 représente une vue schématique du dispositif
- la figure 2 représente une vue de coté d'un exemple de réalisation
- la figure 3 représente une vue de dessus d'une installation comportant plusieurs dispositifs selon l'invention ,
- la figure 4 représente un schéma de principe d'un module d'asservissement ;
- la figure 5 représente une vue schématique d'un dispositif d'entraînement de la plate-forme mobile ;
- la figure 6 représente une vue de dessus du dispositif d'entraînement de la plate-forme mobile ;
- la figure 7 représente une vue en perspective d'une autre variante de réalisation du simulateur selon l'invention ;

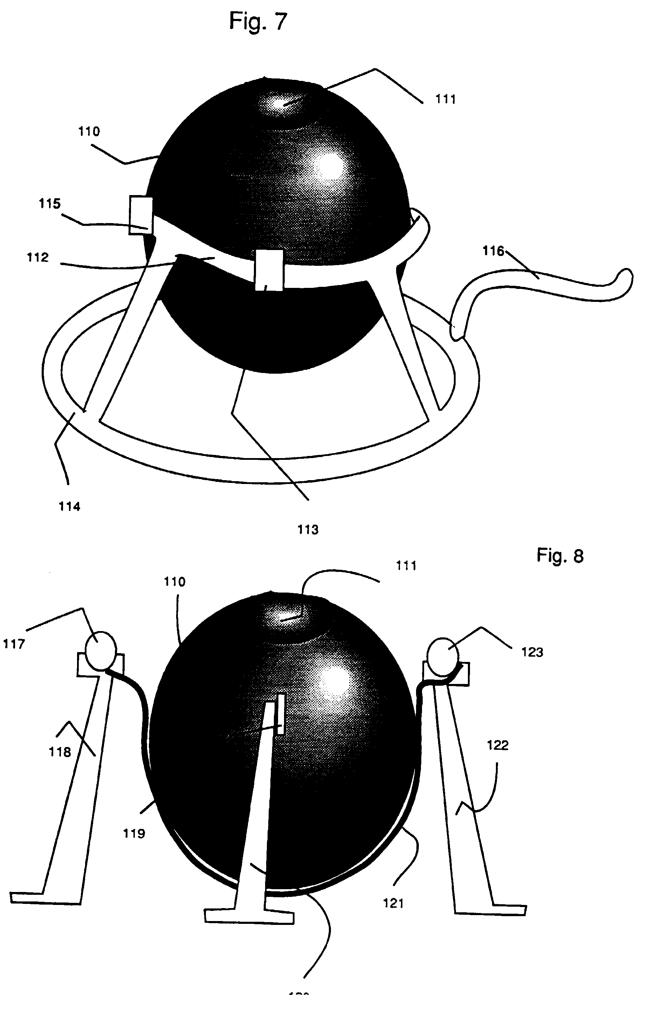

- la figure 7 représente une vue en perspective d'une variante de réalisation du simulateur selon l'invention.

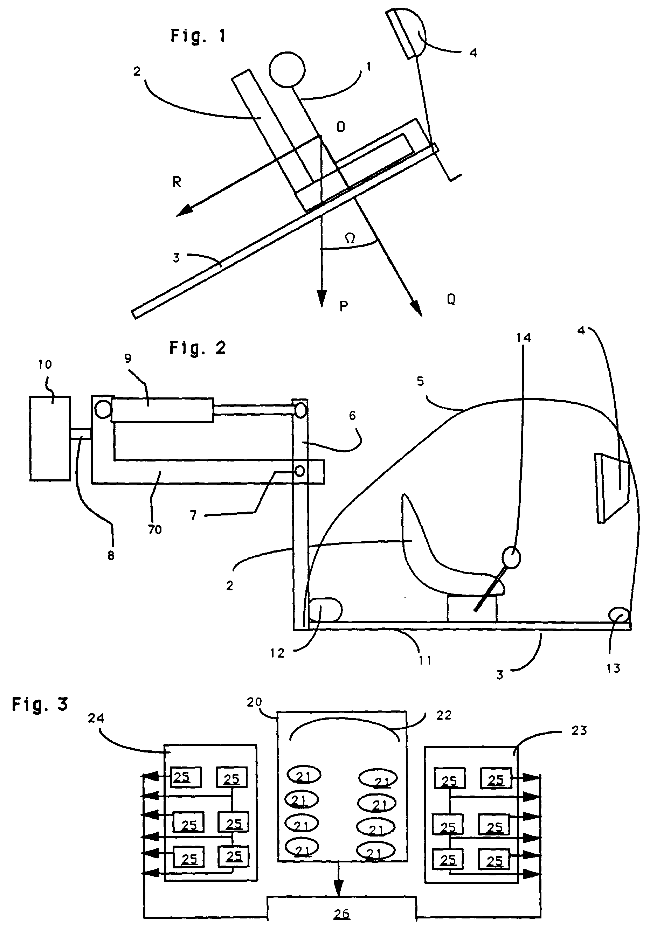

La figure 1 représente une vue schématique du dispositif selon l'invention. L'utilisateur (1) est installé dans un siège (2) solidaire d'une plate-forme mobile (3). Cette plate-forme mobile est inclinable par rapport au référentiel de la terre selon deux axes, afin de permettre un basculement du siège d'avant en arrière d'une part, et de droite à gauche d'autre part, cette orientation faisant référence à la position de l'utilisateur (1).

L'utilisateur est soumis à la gravitation terrestre qui est dirigée selon un axe vertical OP invariable dans le référentiel de la terre. Lorsque la plate-forme (3) est inclinée selon une direction d'un angle $\Omega$, et sous réserve que l'utilisateur ne puisse pas se référer à un repère du référentiel de la terre, il a l'impression de subir une accélération axiale selon un axe OR, d'une valeur

G.Sin $\Omega$ .

L'impression d'accélération est renforcée par la visualisation, sur un écran (4) solidaire de la plate-forme de séquences animées représentant la vision simulée d'un espace virtuel et d'objets vus depuis un engin mobile dans lequel l'utilisateur est censé être installé. L'inclinaison suivant les axes de mobilité de la plate-forme (3) doit être proportionnelle à l'accélération relative de l'engin à bord duquel l'utilisateur est censé être installé par rapport à l'espace virtuel visualisé. L'écran de visualisation peut être constitué par un écran de grande dimension disposé à l'intérieur d'une cabine solidaire de la plate-forme (3) et masquant totalement la perception du référentiel terrestre, ou par un casque individuelle que l'utilisateur coiffe avant de démarrer une séquence, le casque comportant un écran pour la visualisation d'images vidéo.

Le coefficient de proportionnalité entre l'inclinaison et l'accélération simulée peut être paramétrable afin de permettre l'adaptation à différents types de simulation: engin terrestre, pour lesquels l'accélération reste dans des limites relativement faibles, ou engins spatiaux associés à des jeux vidéo, pour lesquels une fourchette d'accélération étendue est requise pour parfaire le réalisme des sensation subies par l'utilisateur. Les paramètres adaptables sont notamment la durée pendant lequel une inclinaison doit être maintenue constante et le coefficient de proportionnalité entre l'accélération virtuelle et l'angle d'inclinaison.

La figure 2 représente un exemple de réalisation particulier d'un dispositif selon l'invention. La plate-forme mobile (3) supporte une cabine (5) masquant totalement l'environnement extérieur, ainsi qu'un siège (2) et un écran de visualisation (4).

La plate-tome mobile (3) est solidaire d'un premier bras (6) mobile dans un plan passant par le siège (2) et l'écran de visualisation (4), autour d'un axe de pivotement (7) perpendiculaire audit plan vertical axial. L'axe de pivotement (7) est supporté par un deuxième bras coudé (70) en forme de "L". Un vérin (9) assure le pivotement du premier bras (6) autour de l'axe (7). Le bras en "L" (70) est supporté par un axe horizontal (8) entraîné par un moteur (10).

Le second axe de pivotement horizontal (8) permet une inclinaison de la plate-forme mobile (3) dans un mouvement de roulis. Cet axe de pivotement (8) est entraîné par un moteur (10) solidaire du référentiel fixe.

Dans l'exemple de réalisation particulier décrit en faisant référence à la figure 2, le siège (2) est mobile axialement par rapport à la plate-forme (3). Le siège (2) est monté sur des roulette coopérant avec des rails de guidage (11). Un système de freinage permet de solidariser ou au contraire de libérer le siège (2) par rapport aux rails de guidage (11).

Des amortisseurs de choc (12, 13) sont disposés à chaque extrémités des rails de guidage (11).

Ce mode de réalisation permet de faire ressentir à l'utilisateur de façon temporaire une sensation d'accélération supérieure à 1 G, pour simuler un effet de "catapulte". Pour ce faire, la plate-forme est inclinée puis le siège est libéré par rapport aux rails de guidage.

L'utilisateur dispose d'une manette de commande (14) de type connue pour agir sur le programme de simulation ou de jeu pilotant par ailleurs les mouvements de la plate-forme mobile (3).

La figure 3 représente un exemple d'installation comportant plusieurs dispositifs selon l'invention.

L'installation comporte un premier dispositif (20) de grande dimension, destiné à recevoir plusieurs utilisateurs sur des sièges (21). La cabine de ce premier dispositif de grande dimension (20) comporte un écran de visualisation (22) visible par l'ensemble des utilisateurs installés à l'intérieur de la cabine. Ce premier dispositif (20) de grande dimension est bien entendu mobile est inclinable selon au moins une direction par rapport au référentiel terrestre, et de préférence selon deux direction perpendiculaire.

L'installation comporte en outre deux satellites (23), (24) fixes soit par rapport au référentiel terrestre, soit par rapport au premier dispositif (20) de grande dimension.

Chacun des satellites (23), (24) comporte une pluralité de dispositifs individuels (25), comportant chacun une plate-forme mobile par rapport au référentiel du satellites correspondant, ainsi qu'un casque individuel.

Le pilotage des mouvements de chacun des dispositifs individuels (25) ainsi que du premier dispositif (20) de grande dimension est assuré par un logiciel de simulation ou de jeu commandant une interface (26) comportant un étage de puissance pour commander les actionneurs, de type vérins, moteurs électriques, ou tout autre actionneur connu. En particulier, dans le cas où la plate-forme mobile est supportée par un système de cardan, l'entraînement peut être réalisé par des moteurs électriques de type pas-à-pas agissant par galets ou par friction.

Une telle installation permet de faire ressentir des impressions complémentaire à une premier groupe d'utilisateurs se trouvant dans le premier dispositif (20) de grande dimension, et à un deuxième groupe d'utilisateurs se trouvant sur les dispositifs individuels (25).

Les premiers utilisateurs peuvent par exemple recevoir des images de synthèse correspondant à celle vue depuis un vaisseau de grande dimension mobile dans un espace de synthèse dans lequel se meuvent des vaisseaux de plus petite dimension, alors que les images visualisés sur les écrans des casques individuels correspondent à celle vues depuis lesdits vaisseaux de petite dimension mobiles dans un espace de synthèse et "voyant" le grand vaisseau.

Une telle installation permet en particulier de gérer un interactivité entre les deux groupes d'utilisateurs, et donc de renforcer le réalisme de la simulation ou d'un jeu de type "bataille dans l'espace".

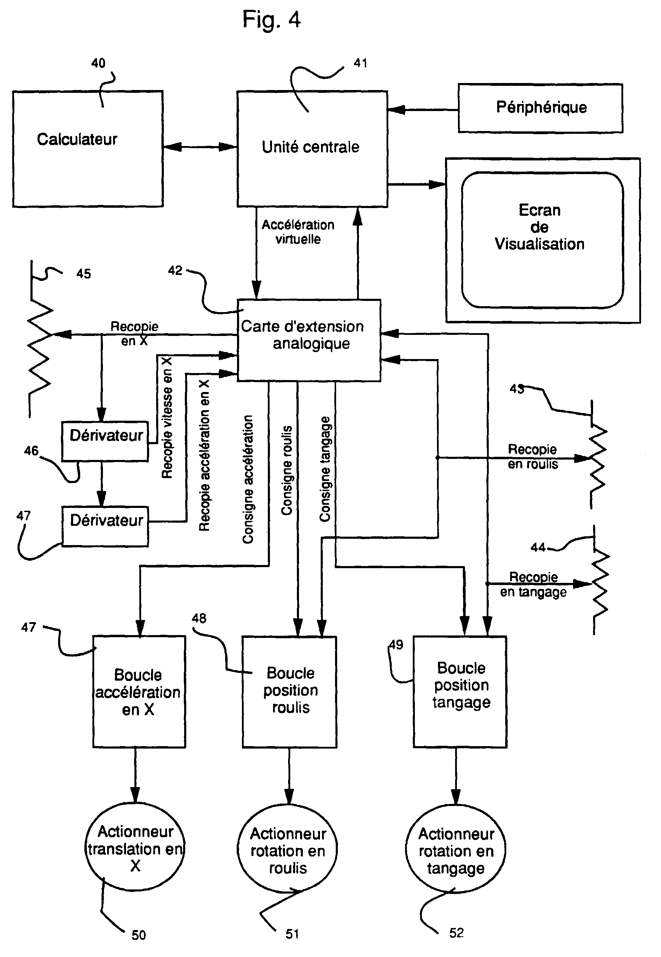

La figure 4 représente le schéma de principe d'une interface de commande des actionneurs du simulateur selon l'invention. Cette interface est reliée de façon connue à un calculateur (40) d'une console de jeu, par une liaison série, par exemple de type RS-232. Une unité centrale (41) comportant un microprocesseur délivre à une carte d'extension analogique (42) des signaux correspondant à l'accélération apparente de l'image visualisée par rapport au référentiel fixe. Un périphérique (43), par exemple un clavier ou une manette de commande, permet de commander le fonctionnement du simulateur en l'absence de console de jeu.

Le simulateur comporte trois capteurs de recopie, respectivement un potentiomètre de recopie (43) de tangage, un potentiomètre de recopie (44) de roulis et un potentiomètre de recopie (45) d'accélération linéaire selon la direction X perpendiculaire à la surface de l'écran de visualisation. Le signal délivré par le potentiomètre de recopie (45) est dérivé deux fois pour délivrer également un signal d'accélération vraie. La carte d'extension analogique (42) délivre des signaux d'asservissement à des circuits de puissance (47 à 49) commandant les actionneurs (50 à 52).

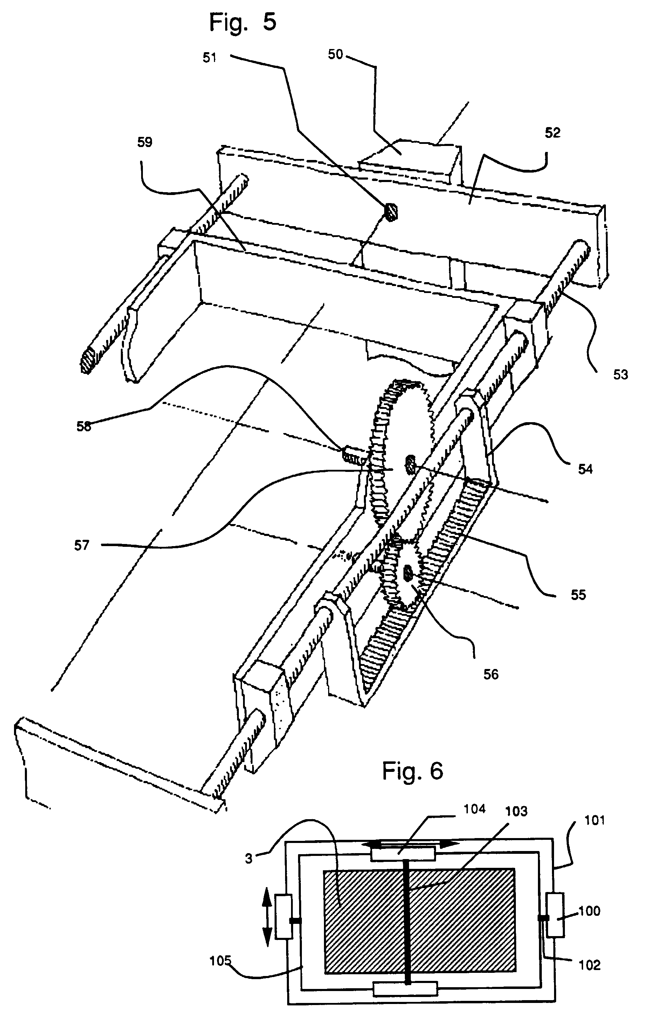

La figure 5 représente un exemple de réalisation d'un mécanisme d'entraînement de la plate-forme mobile (3).

Le dispositif est relié à un support fixe par un montant (50) intégrant un moteur dont l'arbre de sortie (51) assure l'orientation en roulis d'un chariot intermédiaire (52). Ce chariot intermédiaire (52) supporte des tiges cylindrique (53) assurant le guidage d'un étrier (54) et d'une platine (59). La platine (59) supporte l'axe (58) solidaire de la plate-forme mobile (3) non représentée sur cette figure. Cet axe (58) est entraîné par une roue dentée (57) couplée à une roue dentée (56) entraînée par le moteur de positionnement en tangage de la plate-forme mobile. Cette roue dentée (56) est également couplée à une crémaillère (55) solidaire de l'étrier (54). Cette crémaillère assure un déplacement linéaire de la plate-forme mobile, simultanément aux mouvements de tangage.

La figure 6 représente une vue de dessus du mécanisme d'entraînement de la plate-forme mobile (3), selon un mode de réalisation particulier.

La plate-forme (3) est mobile en rotation autour d'un axe (103) entraîné par un moteur solidaire d'un chariot (104) mobile en translation selon une direction perpendiculaire à l'axe de rotation (103). La chariot mobile (104) est guidé par des rail solidaire d'une platine intermédiaire (105). Cette platine intermédiaire (105) est mobile en rotation autour d'un axe (102) parallèle à la direction de déplacement du premier chariot mobile (104). Cet axe (102) est entraîné par un moteur solidaire d'un deuxième chariot (100) mobile selon une direction perpendiculaire à l'axe (102) et est guidé par des rails solidaires d'une platine fixe (101). Ce mode de fonctionnement permet de donner une impulsion en translation au début d'un mouvement de pivotement, et une accélération négative en fin de mouvement de rotation, de façon à améliorer le réalisme de la simulation.

Les mouvements de translation et de rotation sont de préférence obtenus par l'utilisation d'un moteur unique et de moyens de couplage assurant le couplage de la rotation et de la translation.

La figure 7 représente une variante de réalisation dans laquelle la cabine est constituée par un élément sphérique (110), réalisé par exemple par moulage de deux demi-coques en une matière plastique. L'élément sphérique (110) présente une ouverture fermée par une trappe (11). Il repose sur un support constitué par un anneau torique (112) présentant des ouvertures dirigées radialement en direction de l'enveloppe de l'élément sphérique (110). Cet anneau torique (112) est reliée par des empiètement tubulaires creux à une embase (114) alimenté en air comprimé par une tubulure d'alimentation (116).

Le simulateur comporte deux moteurs d'entraînement (113, 115) présentant des galets de friction, assurant les mouvement de rotation dans deux plans perpendiculaires.

L'anneau torique (112) et les piétements sont avantageusement réalisés par des tubes en acier inoxydables.

La figure 8 représente une autre variante, dans laquelle l'élément sphérique (110) est soutenu par des courroies (121) entraînées par des dérouleurs motorisés (117, 123), supportés par des piétements (118, 122). Le mouvement de rotation de l'élément sphérique (110) peut également être obtenu par un galet d'entraînement (119).

La présente invention n'est bien entendu en aucune façon limitée aux exemples de réalisation exposé dans ce qui précède. Bien au contraire, l'Homme de Métier sera a même de réaliser de nombreuses variantes et applications sans pour autant sortir du cadre de la protection conférée par le présent brevet.

**Revendications**

1. Dispositif de simulation d'effets physiques, du type comportant une plate-forme mobile (3) animée par rapport à un référentiel fixe par au moins un actionneur commandant l'inclinaison de la plate-forme (3) en fonction de l'accélération simulée et des moyens pour la visualisation d'images animées, la plate-forme mobile (3) comportant au moins un moyen (2) pour l'installation de l'utilisateur, par exemple un siège, et des moyens (5) pour masquer de la vue de l'utilisateur tout objet du référentiel fixe caractérisé en ce que le dispositif comportant en oeuvre un calculateur (41) délivrant des signaux de commande de l'inclinaison de la plate-forme (3) en fonction de l'accélération calculée d'un point de référence mobile de l'image visualisé par rapport à l'espace fixe de l'image visualisée, les informations relatives au point de référence mobile étant délivrées par le calculateur (40) d'une console de jeu.

2. Dispositif de simulation d'effets physiques selon la revendication 1 caractérisé en ce que la plate-forme mobile (3) est mobile par rapport à au moins un axe de rotation horizontal (9), le dispositif comportant un calculateur (41) délivrant des signaux de commande de l'inclinaison de la plate-forme mobile (3) selon une amplitude angulaire proportionnelle à l'accélération calculée selon un direction horizontale perpendiculaire à l'axe de rotation de la plate-forme mobile (3) d'un point de référence mobile de l'image visualisé par rapport à l'espace fixe de l'image visualisée.

3. Dispositif de simulation d'effets physiques selon la revendication 2 caractérisé en ce que la plate-forme mobile (3) est mobile par rapport à deux axes rotation horizontaux (7), (9), l'inclinaison de ladite plate-forme mobile (3) par rapport à chacun desdits axes horizontaux (7), (9) étant proportionnelle à l'accélération calculée selon la direction horizontale perpendiculaire à l'axe de rotation considéré d'un point de référence de l'image visualisé par rapport à l'espace fixe de l'image visualisée.

4. Dispositif de simulation d'effets physiques selon l'une quelconque des revendications précédentes caractérisé en ce que la plate-forme mobile (3) est mobile est solidaire d'un premier bras mobile (6) en rotation par rapport à un pivot horizontal (7), ledit bras mobile (6) étant articulé en rotation par rapport à un axe horizontal perpendiculaire audit pivot (7).

5. Dispositif de simulation d'effets physiques selon l'une quelconque des revendications précédentes caractérisé en ce que les moyens de visualisations sont constitués par un casque individuelle masquant totalement la visibilité de l'utilisateur et comportant un écran de visualisation intégré.

6. Dispositif de simulation d'effets physiques selon l'une quelconque des revendications 1 à 4 caractérisé en ce que la plate-forme mobile (3) comporte une cabine (5) opaque à l'intérieur de laquelle sont disposés des moyens de visualisations sont constitués par au moins un écran de visualisation (4).

7. Dispositif de simulation d'effets physiques selon l'une quelconque des revendications précédentes caractérisé en ce qu'il comporte au moins une manette (14) pour commander le déroulement d'un programme de visualisation d'images de synthèse.

8. Dispositif de simulation d'effets physiques selon l'une quelconque des revendications précédentes caractérisé en ce que la plate-forme (3) est en outre mobile selon un axe perpendiculaire à la surface de l'écran de visualisation (4).

9. Dispositif de simulation d'effets physiques selon la revendication 8 caractérisé en ce que la plate-forme mobile est entraînée par un mécanisme assurant un déplacement axial simultanément à l'un au moins des mouvements de rotation.

10. Dispositif de simulation d'effets physiques selon l'une quelconque des revendications précédentes caractérisé en ce que la plate-forme (3) est constituée par une cabine comportant une partie inférieure semi-spérique reposant dans un socle présentant une partie creuse complémentaire. Le positionnement et le guidage de la plate-forme est réalisé par des jets d'air sous pression et/ou des galets.

11. Dispositif de simulation d'effets physiques selon la revendication 10 caractérisé en ce qu'il comporte une cabine sphérique (110) reposant sur un socle comportant un anneau torique (112) présentant des orifices sensiblement radiaux dirigés vers l'enveloppe de la cabine sphérique (110).

**Claims**

1. Device for the simulation of physical effects of the type comprising a mobile platform (3) moved with respect to a fixed coordinate system by at least one actuator controlling the inclination of the platform (3) as a function of the simulated acceleration and means of displaying animated images, the mobile platform (3) comprising at least one means (2) for the user to install for example a seat, and means (5) of concealing any object in the fixed coordinate system from the user's view, characterized in that the device comprises a computer (41) that outputs signals to control the inclination of the platform (3) as a function of the calculated acceleration of a reference point on the displayed image with respect to the fixed part of the displayed image, information about the mobile reference point being output by the computer (40) in a games console.

2. Device for the simulation of physical effects according to claim 1, characterized in that the mobile platform (3) is free to move with respect to at least one horizontal axis of rotation (9), the device comprising a computer (41) that outputs signals to control the inclination of the mobile platform (3) over an angular amplitude proportional to the calculated acceleration of a reference point free to move in the displayed image with respect to the fixed part of the displayed image, along a horizontal direction perpendicular to the axis of rotation of the mobile platform (3).

3. Device for the simulation of physical effects according to claim 2, characterized in that the mobile platform (3) is free to move with respect to two horizontal axes of rotation (7), (9), the inclination of the said mobile platform (3) with respect to each of the said horizontal axes (7), (9) being proportional to the calculated acceleration of a reference point in the displayed image with respect to the fixed part of the displayed image, along a horizontal direction perpendicular to the axis of rotation considered.

4. Device for the simulation of physical effects according to any one of the previous claims, characterized in that the mobile platform (3) is free to move and is fixed to a first arm (6) that is free to move in rotation with respect to a horizontal pivot (7), the said mobile arm (6) being hinged in rotation with respect to a horizontal axis perpendicular to the said pivot (7).

5. Device for the simulation of physical effects according to any one of the previous claims, characterized in that the display means consist of an individual headset completely masking the user's visibility and comprising an integrated display screen.

6. Device for the simulation of physical effects according to any one of claims 1 to 4, characterized in that the mobile platform (3) comprises an opaque booth (5) inside which display means are set out composed of at least one display screen (4).

7. Device for the simulation of physical effects according to any one of the previous claims, characterized in that it comprises at least one handle (14) to control execution of a program displaying synthesized images.

8. Device for the simulation of physical effects according to any one of the previous claims, characterized in that the platform (3) is also free to move along an axis perpendicular to the surface of the display screen (4).

9. Device for the simulation of physical effects according to claim 8, characterized in that the mobile platform is driven by a mechanism controlling axial displacement simultaneously with at least one of the rotation movements.

10. Device for the simulation of physical effects according to any one of the previous claims, characterized in that the platform (3) is composed of a booth forming a lower hemispherical part supported in a base with a complementary hollow part. The platform is positioned and guided by pressurized air jets and/or rollers.

11. Device for the simulation of physical effects according to claim 10, characterized in that it comprises a spherical booth (110) supported on a base with a O-ring (112) with approximately radial orifices facing the enclosure of the spherical booth (110).

**Patentansprüche**

1. Simulationsvorrichtung von physikalischen Effekten des Typs mit einer mobilen Plattform (3), die in Bezug auf ein festes Referenzwerk von mindestens einem Wirkglied betätigt wird, das die Schrägstellung der Plattform (3) entsprechend der simulierten Beschleunigung steuert, und mit Mitteln für die Visualisierung von belebten Bildern, wobei die mobile Plattform (3) mindestens ein Mittel (2) für die Installation des Benutzers umfasst, beispielsweise einen Sitz, und Mittel (5), um Objekte des festen Referenzwerks von den Augen des Benutzers zu verstecken, dadurch gekennzeichnet, dass die eingesetzte Vorrichtung einen Rechner (41) umfasst, der Steuersignale der Schrägstellung der Plattform (3) entsprechend der berechneten Geschwindigkeit eines mobilen Referenzpunktes des visualisierten Bildes in Bezug auf den festen Raum des visualisierten Bildes liefert, wobei die Informationen bezüglich des mobilen Referenzpunktes vom Rechner (40) einer Spielkonsole geliefert werden.

2. Simulationsvorrichtung von physikalischen Effekten nach Anspruch 1, dadurch gekennzeichnet, dass die mobile Plattform (3) in Bezug auf mindestens eine horizontale Rotationsachse (9) mobil ist, wobei die Vorrichtung einen Rechner (41) umfasst, der Steuersignale für die Schrägstellung der mobilen Plattform (3) entsprechend einer Winkelamplitude liefert, die proportional zur nach einer horizontalen, lotrecht zur Rotationsachse der mobilen Plattform (3) berechneten Beschleunigung eines mobilen Referenzpunktes des visualisierten Bildes in Bezug auf den festen Raum des visualisierten Bildes ist.

3. Simulationsvorrichtung von physikalischen Effekten nach Anspruch 2, dadurch gekennzeichnet, dass die mobile Plattform (3) in Bezug auf zwei horizontale Rotationsachsen (7), (9) mobil ist, wobei die Schrägstellung der besagten mobilen Plattform (3) in Bezug auf jede der besagten horizontalen Achsen (7), (9) proportional zur nach der horizontalen, lotrecht zur betrachteten Rotationsachse berechneten Beschleunigung eines Referenzpunktes des visualisierten Bildes in Bezug auf den festen Raum des visualisierten Bildes ist.

4. Simulationsvorrichtung von physikalischen Effekten nach einem der vorstehend genannten Ansprüche, dadurch gekennzeichnet, dass die mobile Plattform (3) mobil mit einem ersten mobilen Arm (6) verbunden ist, der sich um einen horizontalen Drehzapfen (7) dreht, wobei der besagte mobile Arm (6) in Bezug auf eine horizontale, lotrecht zum besagten Drehzapfen (7) verlaufende Achse rotationsgelagert ist.

5. Simulationsvorrichtung von physikalischen Effekten nach einem der vorstehend genannten Ansprüche, dadurch gekennzeichnet, dass die Visualisierungsmittel aus einem individuellen Kopfbügel bestehen, der die Sicht des Benutzer völlig maskiert und einen integrierten Visualisierungsbildschirm umfasst.

6. Simulationsvorrichtung von physikalischen Effekten nach einem der Ansprüche 1 bis 4, dadurch gekennzeichnet, dass die mobile Plattform (3) eine undurchsichtige Kabine (5) umfasst, in der die aus mindestens einem Visualisierungsbildschirm (4) bestehenden Visualisierungsmittel angeordnet sind.

7. Simulationsvorrichtung von physikalischen Effekten nach einem der vorstehend genannten Ansprüche, dadurch gekennzeichnet, dass sie mindestens ein Bedienungshebel (14) zur Steuerung des Ablaufs eines Visualisierungsprogramms von Synthesebildern umfasst.

8. Simulationsvorrichtung von physikalischen Effekten nach einem der vorstehend genannten Ansprüche, dadurch gekennzeichnet, dass die Plattform (3) weiterhin nach einer lotrecht zur Oberfläche des Visualisierungsbildschirms (4) verlaufenden Achse mobil ist.

9. Simulationsvorrichtung von physikalischen Effekten nach Anspruch 8, dadurch gekennzeichnet, dass die mobile Plattform von einem Mechanismus angetrieben wird, der eine axiale Verschiebung gleichzeitig zu mindestens einer der Rotationsbewegungen gewährleistet.

10. Simulationsvorrichtung von physikalischen Effekten nach einem der vorstehend genannten Ansprüche, dadurch gekennzeichnet, dass die Plattform (3) aus einer Kabine besteht, die einen halbkugelförmigen unteren Teil umfasst, der in einem Sockel mit einem entsprechenden hohlen Teil angeordnet ist. Die Positionierung und Führung der Plattform erfolgt durch unter Druck stehenden Luftstrahlen und/oder Walzen.

11. Simulationsvorrichtung von physikalischen Effekten nach Anspruch 10, dadurch gekennzeichnet, dass sie eine kugelförmige Kabine (110) umfasst, die auf einem Sockel angeordnet ist, der einen O-Ring (112) mit etwa radialen, zum Gehäuse der kugelförmigen Kabine (110) ausgerichteten Öffnungen aufweist.

Fig. 1

Fig. 2

Fig. 3

# Fig. 4

## Fig. 5

## Fig. 6

## Fig. 7

## Fig. 8